# EUROPEAN PATENT APPLICATION

(11) **EP 1 717 506 A1**
(43) Date of publication of application: **02.11.2006**
(21) Application number: 06007300.4
(22) Date of filing: 06.04.2006
(51) Int. Cl.: F16L 47/04, F16L 19/025

(54) **Resin pipe joint unit**

(30) Priority: 28.04.2005 JP 2005132104
(71) Applicant: Miraial Co., Ltd., Tokyo (JP)
(72) Inventor: Hyobu, Yukihiro, Toshima-ku Tokyo (JP); Nakano, Ryuichi c/o Kumamoto Plant, Kikuchi-shi Kumamoto-ken (JP); Iwaki, Tadao, Toshima-ku Tokyo (JP)
(74) Representative: Grünecker, Kinkeldey, Stockmair & Schwanhäusser Anwaltssozietät

(57) **Abstract**

A resin pipe joint is provided so that a general worker can easily connect a resin pipe without using a special tool. The resin pipe joint unit includes synthetic resin joint bodies (2), a synthetic resin pipe unit (6a,51), and junk rings (4). The synthetic resin joint bodies (2) have tubular sockets (7) at one end portion thereof. The synthetic resin pipe unit (6a,51) has predetermined diameter and length, and inner ring portions (51) are integrally formed in at least one end of a pipe portion (6a) in the synthetic resin pipe unit. The junk rings (4) are screwed on the sockets (7) of the joint bodies (2). In the resin pipe joint unit, the pipe unit (6a,51) is connected to the joint bodies (2) by pressing end faces of the inner ring portions (51) toward the side of the joint bodies (2) respectively, when the junk rings (4) are screwed on the sockets (7) of the joint bodies (2).

## Description

### BACKGROUND OF THE INVENTION

The present invention relates to a resin pipe joint used for piping of ultrapure water, a chemical solution, and the like which are used in production processes such as semiconductor production, pharmaceutical production, food processing, chemical engineering, and the like.

Conventionally there is known a resin pipe joint disclosed in Japanese Patent No. 2949576 (page 3, Fig. 1). Fig. 5 shows the resin pipe joint disclosed in Japanese Patent No. 2949576. The resin pipe joint includes a joint body 100, an inner ring 103, and a junk ring 102. A swelling portion 105 and a tubular projection 107 are formed in the inner ring 103. The swelling portion 105 has a spike shape in section. The spike-shaped swelling portion 105 formed in the inner ring 103 is pressed into an end portion 106 of a pipe material 104, and the spike-shaped swelling portion 105 and the end portion 106 are fitted in the joint body 100. Therefore, the tubular projection 107 is inserted into an annular groove portion 108 to tighten the junk ring 102, which allows the pipe material 104 to be coupled with the joint body 100.

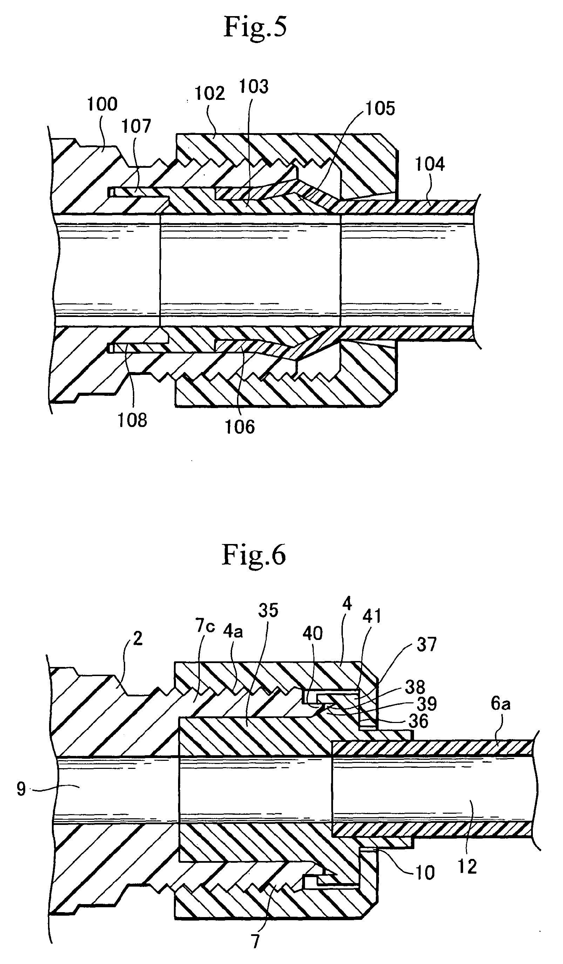

The pipe material 104 is cut into a predetermined length immediately before the pipe material 104 is used, and the pipe material 104 is inserted into the inner ring 103 having a proper diameter. As described above, the resin pipe joint is used for the piping of ultrapure water, a chemical solution, and the like which are used in production processes such as the semiconductor production, the pharmaceutical production, food processing, the chemical engineering, and the like. Therefore, the resin pipe joint is made of fluororesin having the excellent heat-resistant property and chemical-resistant property. Generally, it is difficult to couple the fluororesin with a bonding agent. Further, because the fluororesin has good lubricity and a large coefficient of thermal expansion, the pipe made of the fluororesin drop off easily in the usual mechanical fitting when mechanical drawing force is applied in a thermal cycle environment. Therefore, as shown in Fig. 5, the fitting strength is enhanced such that the pipe material 104 is fitted in the swelling portion 105 having the spike shape in section or such that the tubular projection 107 is inserted into the annular groove portion 108.

However, in the conventional resin pipe joint, it is difficult to couple the pipe material 104 with the inner ring 103. That is, when the pipe material 104 is coupled with the inner ring 103, the pipe material 104 is cut into a predetermined length with a tube cutter (not shown), an end face of the pipe material 104 is heated and softened with a heating machine such as a burner, the pipe material 104 is inserted into the spike-shaped swelling portion 105 of the inner ring 103, and the junk ring 102 is screwed to perform the coupling. Therefore, it is difficult that a general worker easily couples the resin pipe.

In the spike-shaped swelling portion 105, buckling degradation is generated with time due to a long-term use, which results in a problem that the pipe material 104 is easy to come apart at the joint.

### SUMMARY OF THE INVENTION

An object of the invention is to provide a degradation-free resin pipe joint in which a general worker can easily connect a resin pipe material without using a special tool.

A resin pipe joint unit according to the invention includes a synthetic resin joint body which has a tubular socket at one end portion thereof; a synthetic resin pipe unit having the predetermined pipe diameter and length in which an inner ring portion is integrally formed in at least one end of a pipe portion; and a junk ring which is screwed on the socket of the joint body, wherein the pipe unit is connected to the joint body in an airtight manner by pressing an end face of the inner ring portion toward a side of the joint body, when the junk ring is screwed on the socket of the joint body.

The pipe portion and the inner ring portion are integrated with each other to form the pipe unit having the predetermined pipe diameter and length. Therefore,a general worker can easily connect the pipe to the resin pipe joint without using a special tool, and the degradation is not generated because the swelling portion is eliminated, which allows the above problems to be solved.

In a resin pipe joint unit according to the invention, the inner ring portion is integrally formed by thermally fusion-bonding the inner ring portion to the pipe portion. Therefore, various kinds of thermoplastic resin can be used, and the fluororesin having the excellent heat-resistant property and chemical-resistant property can also be integrated with sufficient strength.

In a resin pipe joint unit according to the invention, a pair of the inner ring portions is formed at both ends of the pipe portion, and a pair of junk rings is attached to the pipe unit so that a thread portion formed in the junk ring is couplable to a thread portion of the joint body, the pair of junk rings connecting the pair of inner ring portions to each of different joint bodies.

The both ends of the pipe are often connected to the resin pipe joints in the case where the pipe is connected to the resin pipe joint. Therefore, not only the both ends of the pipe can be connected, but also the junk ring and the pipe unit are not separated, so that the loss of the component is eliminated, workability and ease of pipe connecting are improved, and the problem can be solved.

In a resin pipe joint unit according to the invention, a pressing portion of the inner ring portion has a flanged portion whose outer diameter is equal to or slightly smaller than a socket outer diameter of the joint body, a circular flange groove is formed on the joint body side of the flanged portion, an inner-peripheral side-face of the flange groove and an inner-peripheral side-face of a socket end portion of the joint body are formed in annular slopes while facing each other, and the socket end portion is inserted into the circular groove of the flanged portion when the junk ring is screwed on the socket of the joint body.

When the junk ring is screwed on the socket of the joint body, the socket end portion is tightened by the groove of the inner ring portion while the junk ring presses the pressing portion of the inner ring portion in a wide area. Therefore, the high sealing property can be realized by tightening the junk ring with a usual well-known tool, and the problem can be solved.

In a resin pipe joint unit according to the invention, a circular ring-portion groove is formed in an outer peripheral portion on the joint body side of the inner ring portion, a circular body groove is formed in an outermost peripheral portion of a surface facing the inner ring portion of the joint body, and a circular body projection is formed in the outermost peripheral portion while being adjacent to the circular groove, an inner-peripheral side-face of the ring-portion groove and an inner-peripheral side-face of the body projection are formed in annular slopes while facing each other, and the outermost peripheral portion of the inner ring portion is inserted into the body groove and the body projection is inserted into the ring-portion groove, when the junk ring is screwed on the socket of the joint body.

When the junk ring is screwed on the socket of the joint body, the both ends of the inner ring portion can be tightened and fixed while the junk ring presses the pressing portion of the inner ring portion in the wide area. Therefore, the high sealing property can be realized by tightening the junk ring with a usual well-known tool, and the problem can be solved.

In a resin pipe joint unit according to the invention, at least one circular projection is formed in a cylindrical side face of the inner ring portion. Therefore, when the junk ring is screwed on the socket, the circular projection can enter the inner peripheral surface of the joint body to enhance the strength, and the problem can be solved.

In a resin pipe joint unit according to the invention, at least the joint body and the pipe material are made of fluororesin. Therefore, the resin pipe joint having the excellent heat-resistant property and chemical-resistant property can be formedwhile the ease of handling is maintained, and the problem can be solved.

In a resin pipe joint unit according to the invention, the inner ring portion desirably includes a base-end face perpendicular to a pressing direction by the junk ring on a base end side thereof, and the junk ring desirably includes a pressing portion which abuts on and presses the base-end face of the inner ring portion.

Therefore, the pressing portion of the junk ring abuts on and presses the inner-ring-portion base-end face perpendicular to the pressing direction. This enables the pipe unit not to drop off from the junk ring, even if the inner ring portion is softened by the flow of the high-temperature fluid.

In a resin pipe joint unit according to the invention, the inner ring portion desirably includes a base-end face perpendicular to a pressing direction by the junk ring on a base end side thereof while including a front-end face perpendicular to the pressing direction on a front end side thereof, the junk ring includes a pressing portion which abuts on and presses the base-end face of the inner ring portion, and the socket of the joint body desirably includes a bottom surface which the front-end face of the inner ring portion abuts on and comes into close contact with.

This enables the pipe unit not to drop off from the junk ring, even if the inner ring portion is softened by the flow of the high-temperature fluid. Further, the inner-ring-portion front-end face perpendicular to the pressing direction abuts on and presses the bottom surface of the socket of the joint body to secure the sealing.

In the resin pipe joint of the invention, since the pipe unit is formed by unitizing the inner ring and junk ring which fix the pipe to the joint body, a general worker can easily connect the pipe to the joint body without using a special connecting tool. Therefore, the connecting work time can be shortened and equalization of connection quality can be realized, and there are advantages that work cost of the pipe connection is reduced and the quality is stabilized.

The pipe units are formed, which results in the use of the pipe units in which the pipe diameters and pipe lengths are standardized in some steps. Therefore, there is an advantage that the standardization of the apparatus, in which the resin pipe joint unit of the invention is used, is promoted.

In the resin pipe joint of the invention, the drop-off or the like is never generated even if the resin pipe joint is used for a long time. Therefore, there is an advantage that life of the apparatus in which the resin pipe joint of the invention is used can be lengthened.

### BRIEF DESCRIPTION OF THE DRAWINGS

Fig. 1 is a perspective view showing an overall configuration of a resin pipe joint unit according to a first embodiment of the invention;
Fig. 2 is a sectional view showing a main part of the resin pipe joint unit according to the first embodiment of the invention;
Fig. 3 is a sectional view showing a main part of a resin pipe joint unit according to a second embodiment of the invention;
Fig. 4 is a sectional view showing a main part of a resin pipe joint unit according to a third embodiment of the invention;
Fig. 5 is a sectional view showing a configuration of a conventional resin pipe joint;
Fig. 6 is a sectional view showing a main part of a resin pipe joint unit according to a fourth embodiment of the invention;
Fig. 7 is a sectional view showing a main part of a resin pipe joint unit according to a fifth embodiment of the invention; and
Fig. 8 is a sectional view showing a main part of a resin pipe joint unit according to a sixth embodiment of the invention.

### DESCRIPTION OF THE PREFERRED EMBODIMENTS

Preferred embodiments of the invention will be described below with reference to the drawings.

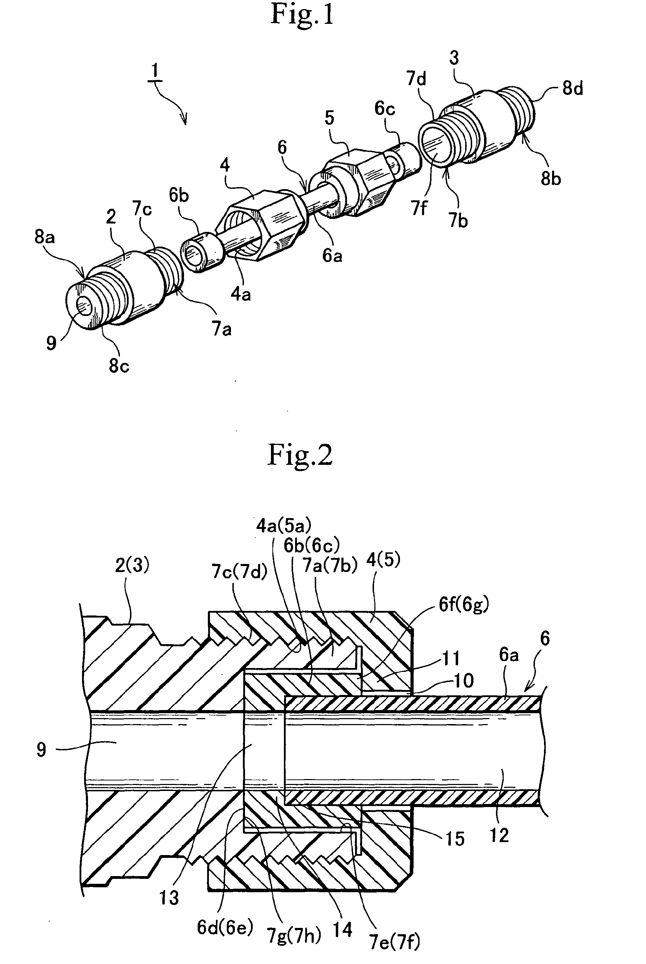

An overall configuration of a resin pipe joint unit 1 will be described with reference to Fig. 1. Fig. 1 is a perspective view schematically showing a configuration of the resin pipe joint unit 1 according to a first embodiment of the invention. Referring to Fig. 1, the resin pipe joint unit 1 of the first embodiment includes a first joint body 2, a second joint body 3, a first junk ring 4, a second junk ring 5, and a pipe unit 6.

The first joint body 2 and the second joint body 3 are formed in a tubular shape, and flow paths 9 are provided in the center thereof. Sockets 7a and 7b and connecting portions 8a and 8b are formed on both sides of the first joint body 2 and the second joint body 3 respectively. The sockets 7a and 7b are a portion which is connected to the pipe unit 6. External threads 7c and 7d and inner ring receiving portions 7e and 7f (only inner ring receiving portion 7f is shown in Fig. 1) are provided in the sockets 7a and 7b respectively. The later mentioned first inner ring portion 6b and second inner ring portion 6c of the pipe unit 6 are fitted in the inner ring receiving portions 7e and 7f respectively. The connecting portions 8a and 8b are a portion which is connected to an apparatus main body (not shown). External threads 8c and 8d are provided in outer peripheries of the connecting portions 8a and 8b. Each of the external threads 8c and 8d is screwed and connected to a connection portion (not shown) of the apparatus main body.

The pipe unit 6 includes a pipe portion 6a, the first inner ring portion 6b, and the second inner ring portion 6c. The pipe portion 6a is cut into a setting length. The first inner ring portion 6b and the second inner ring portion 6c are integrally formed at both ends of the pipe portion 6a respectively.

Each component constituting the resin pipe joint unit 1 of the first embodiment is made of a natural resin or a synthetic resin. Particularly, in the case where the resin pipe joint unit 1 is used in the semiconductor production or the pharmaceutical production where the heat-resistant property and the chemical-resistant property are required, the resin pipe joint unit 1 is often made of fluororesin. Examples of the fluororesin include PFA (tetrafluoroetylen and perfluoro alkoxyvinnyl ether copolymer), PTEF (polytetrafluoroetylen plastics), ETFE (etylene tryfluoro etylene), CTFE (chloro-tryfluoro ethylene), and ECTFE (etylene chloro tryfluoro etylene).

Since generally a binder cannot be used in the fluororesin, the usual bonding agent such as the binder cannot be used when the pipe unit 6 used in the resin pipe joint unit 1 of the invention is formed. Accordingly, in the first embodiment, the pipe portion 6a, the first inner ring portion 6b, and the second inner ring portion 6c are integrally formed in injection molding. Alternatively, the pipe portion 6a is produced in a predetermined pipe diameter and length by extruding, and the first inner ring portion 6b and second inner ring portion 6c previously and separately formed by the injection molding are integrated with the pipe portion 6abythermal fusionbonding. Particularly, the latter method is suitable in the case where the pipe unit 6 having the long pipe portion 6a is produced.

Thus, when the first inner ring portion 6b and the second inner ring portion 6c are integrally formed on the both ends of the pipe portion 6a, for example, only the first inner ring portion 6b is fitted in the socket 7a of the joint body 2 to screw the first junk ring 4, which allows the pipe portion 6a to be easily attached to the joint body 2. The second joint body 3 can be attached as in the case of the joint body 2. At this point, since the first inner ring portion 6b and the second inner ring portion 6c is integrated with the pipe portion 6a by the thermal fusion bonding, even if large thermal shock is applied, the resin pipe joint unit 1 keeps the sealing property to eliminate the generation of the fluid leakage or the drop-off.

In the resin pipe joint unit 1, the external threads 7c and 7d which engage internal threads formed in inner peripheral surfaces of the first junk ring 2a and second junk ring 2b are formed in the outer peripheries of the sockets 7a and 7b of the first joint body 2 and second joint body 3 respectively, and the external threads 8c and 8d which engage internal threads (not shown) provided in the apparatus are formed in the outer peripheries of the connecting portions 8a and 8b of the first joint body 2 and second joint body 3 respectively. It is obvious that a method of forming these screws slightly depends on the configuration of the connected apparatus and the like.

In order to improve a sealing property, a sealing material such as an O-ring may be attached to each of the inner ring portions 6b and 6c. In the case of the O-ring, ring grooves are provided in portions where the inner ring portions 6b and 6c come into contact with the inner ring receiving portions 7e and 7f respectively, and the O-rings are attached to the ring grooves.

The first junk ring 4 and the second junk ring 5 are rotatably and movably passed through the pipe portion 6a toward a direction in which the internal threads 4a and 5a formed in the first junk ring 4 and the second junk ring 5 engage the external threads 7c and 7d of the first joint body 2 and second joint body 3 respectively. On the other hand, since the first inner ring portion 6b and the second inner ring portion 6c are integrally formed on the both sides of the pipe unit 6, the first junk ring 4 and the second junk ring 5 cannot be separated from the pipe unit 6.

In the first embodiment, the inner ring portions 6b and 6c are integrally formed on the both sides of the pipe unit 6. However, the inner ring portions 6b and 6c may be formed on at least one end of the pipe portion 6a. In this case, the junk rings 4 and 5 can be separated from the pipe unit 6. It is obvious that the junk rings 4 and 5 cannot be separated from the pipe unit 6 by forming a lock mechanism in the pipe portion 6c. For the lock mechanism, a locking part separately produced may be thermally fusion-bonded to the pipe portion 6c after the junk rings 4 and 5 are inserted, or the locking part may mechanically be fitted.

Then, resin pipe joint units according to embodiments of the invention will specifically be described with reference to the drawings.

### (First Embodiment)

Fig. 2 is a sectional view schematically showing a configuration of a resin pipe joint unit according to the first embodiment of the invention. The resin pipe joint unit of the first embodiment is described above, and a specific configuration of a connecting portion between a joint bodies 2 and 3 and the pipe unit 6 will be described below.

The joint bodies 2 and 3 have a tubular structure having the flow path 9, and each of the sockets 7a and 7b are formed at one end of each of the joint bodies 2 and 3. The inner ring receiving portions 7e and 7f of the sockets 7a and 7b receive the inner ring portions 6b and 6c of the pipe unit 6 respectively. In the inner ring receiving portions 7e and 7f, inner diameters are formed slightly larger than outer diameters of the inner ring portions 6b and 6c at each one end of the flow path 9 of the sockets 7a and 7b. Depths of the inner ring receiving portion 7e and 7f are set slightly shorter than lengths of the inner ring portions 6b and 6c. Therefore, while the inner ring portions 6b and 6c are inserted into the inner ring receiving portions 7e and 7f respectively, base-end portions of the inner ring portions 6b and 6c extends slightly off, and the base-end portions are tightened by the junk rings 4 and 5. Bottom surfaces 7g and 7h of the inner ring receiving portions 7e and 7f are formed in flat planes perpendicular or nearly perpendicular to pressing directions (axial center direction of pipe portion 6a) by the junk rings 4 and 5, and the bottom surfaces 7g and 7h abut on front-end faces 6d and 6e of the inner ring portions 6b and 6c.

The junk rings 4 and 5 have cap structures. Each one end of the junk rings 4 and 5 having the cap structures has the inner diameter which can be connected to each of the joint bodies 2 and 3. The internal threads 4a and 5a which engage the external threads 7c and 7d of the joint bodies 2 and 3 are formed in the inner peripheries of the junk rings 4 and 5 respectively. An opening 10 is provided at the other end of each of the junk rings 4 and 5. The opening 10 is larger than the outer diameter of the pipe portion 6a of the pipe unit 6, and the opening 10 is smaller than the outer diameter of the inner ring portions 6b and 6c. A pressing portion 11 is formed at the other end of each of the junk rings 4 and 5. The pressing portions 11 abut on the base-end faces 6f and 6g of the inner ring portions 6b and 6c, inserted into the inner ring receiving portions 7e and 7f, to tighten the inner ring portions 6b and 6c. That is, the sealing is established by tightening the inner ring portions 6b and 6c with the junk rings 4 and 5, such that not only the bottom surfaces 7g and 7h of the inner ring receiving portions 7e and 7f and the front-end faces 6d and 6e of the inner ring portions 6b and 6c come into press-contact with each other, but also the pressing portion 11 and the base-end faces 6f and 6g of the inner ring portions 6b and 6c come into press-contact with each other. The base-end faces 6f and 6g are formed in planes perpendicular to the pressing direction (axial center direction of pipe portion 6a) such that the pressing forces by the junk rings 4 and 5 are not shifted. This is because, even if the inner ring portions 6b and 6c are softened by the flow of high-temperature liquid or the like, the pressing portion 11 surely presses the base-end faces 6f and 6g to prevent the pipe unit 6 from dropping off from the junk rings 4 and 5.

The inner ring portions 6b and 6c have the cap structures, and the inner ring portions 6b and 6c are attached to end portions of the pipe portion 6a. The inner diameter of each one end of the inner ring portions 6b and 6c is equal to or slightly smaller than the outer diameter of the pipe portion 6a, and the pipe portion 6a can be inserted into the inner ring portions 6b and 6c while the pipe portion 6a and the inner ring portions 6b and 6c engage with each other. The inner diameter of the other end of each of the inner ring portions 6b and 6c is formed so as to be substantially equal to the inner diameter of the pipe portion 6a. As a result, a step portion generated by the different inner diameters of the inner ring portions 6b and 6c forms a receiving portion 14 of the pipe portion 6a. That is, in a front-end portion 15 of the pipe portion 6a, an insertion amount is controlled by the receiving portion 14 of the inner ring portions 6b and 6c. Then, the thermal fusion bonding is performed on the pipe portion 6a inserted into the inner ring portions 6b and 6c, and the pipe portion 6a and the inner ring portions 6b and 6c are integrated with each other. Thus, the pipe unit 6 in which the inner ring portions 6b and 6c are integrated with the pipe portion 6a is formed. Flow paths (flow path 12 in pipe portion 6a and flow paths 13 in inner ring portions 6b and 6c) are continuously formed inside the pipe unit 6. The flow path 12 and the flow paths 13 have the same inner diameters as those of the flow paths 9 of the joint bodies 2 and 3.

In Fig. 2, for the purpose of explanation, the inner ring portions 6b and 6c and the pipe portion 6a are separately formed by drawing boundaries between the inner ring portions 6b and 6c and the pipe portion 6a. However, actually the inner ring portions 6b and 6c and the pipe portion 6a are integrated by the thermal fusion bonding, so that the boundaries do not substantially exist after the thermal fusion bonding. The boundaries do not obviously exist in the case where the inner ring portions 6b and 6c and the pipe portion 6a are integrally produced from the beginning by the injection molding.

The inner ring portions 6b and 6c, formed in the above-described manner, of the pipe unit 6 are inserted into the inner ring receiving portions 7e and 7f of the sockets 7a and 7b, and the junk rings 4 and 5 are screwed on the external threads 7c and 7d of the sockets 7a and 7b. This enables the pressing portions 11 of the junk rings 4 and 5 to press the base-end faces 6f and 6g of the inner ring portions 6b and 6c to press the front-end faces 6d and 6e of the inner ring portions 6b and 6c against the bottom surfaces 7g and 7h of the inner ring receiving portions 7e and 7f. Therefore, the front-end faces 6d and 6e of the inner ring portions 6b and 6c come into close contact with the bottom surfaces 7g and 7h of the inner ring receiving portions 7e and 7f to form the seal between the flow path 9 and the pipe unit 6, so that the fluid flowing in the joint can be sealed in an airtight manner. Further, since the pressing portions 11 of the junk rings 4 and 5 press the base-end faces 6f and 6g of the inner ring portions 6b and 6c at the plane perpendicular to the pressing direction, the junk rings 4 and 5 securely support the inner ring portions 6b and 6c. Accordingly the pipe unit 6 is prevented from dropping off from the joint bodies 2 and 3.

Since the first joint body 2, the second joint body 3, the inner ring portions 6b and 6c, and the flow paths 9, 12, and 13 of the pipe portion 6a substantially have the same diameter, the first joint body 2, the second joint body 3, the inner ring portions 6b and 6c, and the flow paths 9, 12, and 13 can be connected without generating the step. As a result, flow path resistance generated by the connection of the resin pipe joint of the invention can be minimized.

The pipe portion 6a and the inner ring portions 6b and 6c are integrally formed. Therefore, even if the thermal shock is applied to the resin pipe joint unit 1 of the first embodiment by temperature change of the fluid, the resin pipe joint unit 1 can safely be used without generating the drop-off of the pipe portion 6a and the leakage from the boundary between the pipe portion 6a and the inner ring portions 6b and 6c.

### (Second Embodiment)

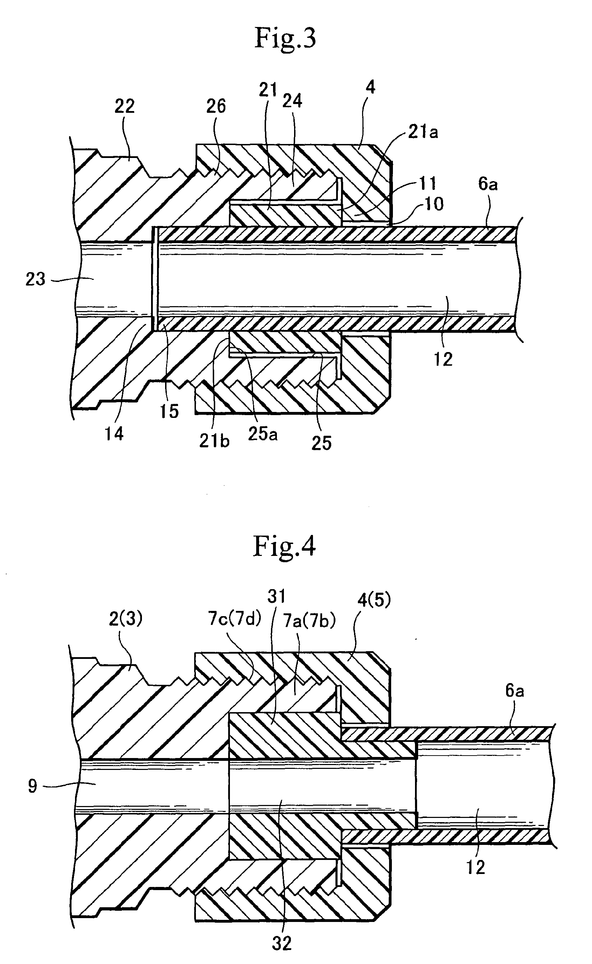

Fig. 3 is a sectional view schematically showing a configuration of a resin pipe joint unit according to a second embodiment of the invention. The overall configuration of the resin pipe joint unit of the second embodiment is substantially similar to that of the resin pipe joint unit 1 of the first embodiment. Therefore, in Fig. 3, the component having the same action as the first embodiment shown in Figs. 1 and 2 is designated by the same reference numeral, and the detailed description will be omitted.

The second embodiment shown in Fig. 3 differs from the first embodiment shown in Figs. 1 and 2 in that the pipe portion 6a pierces completely through an inner ring portion 21 and the pipe portion 6a is integrated with the inner ring portion 21. This enables the pre-thermal-fusion-bonding structure of the inner ring portion 21 to be simplified.

On the other hand, the inside of a joint body 22 is formed in two-step inner diameters such that the inner ring portion 21 and the pipe portion 6a can be inserted. That is, a flow path 23 of the joint body 22 and the flow path 12 of the pipe portion 6a are formed so as to be connected to each other with the substantially same diameter.

In the second embodiment, similarly to the first embodiment, the inner ring portion 21 of the pipe unit is inserted into an inner ring receiving portion 25 of a socket 24, and the junk ring 4 is screwed on an external thread 26 of the socket 24. This enables the pressing portions 11 of the junk ring 4 to press a base-end face 21a of the inner ring portion 21 to press a front-end face 21b of the inner ring portion 21 against a bottom surface 25a of the inner ring receiving portion 25. Therefore, the front-end face 21b of the inner ring portion 21 come into close contact with the bottom surface 25a of the inner ring receiving portion 25 to form the seal between the flow path 23 and the pipe unit, so that the fluid flowing in the joint can be sealed in an airtight manner.

At this point, an end portion 15 of the pipe portion 6a and an inner end portion 14 of the joint body 1 are arranged while slightly separated from each other. This is because the end portion 15 and the inner end portion 14 do not interfere with the close contact of the inner ring portion 21 with the bottom surface 25a of the inner ring receiving portion 25. When the end portion 15 and the inner end portion 14 are excessively separated from each other, energy loss is generated in the fluid flow in the flow paths 12 and 23. Therefore the gap should not be so wide.

In this case, the same action and effect as the first embodiment are obtained.

### (Third Embodiment)

Fig. 4 is a sectional view schematically showing a configuration of a resin pipe joint unit according to a third embodiment of the invention. The overall configuration of the resin pipe joint unit of the third embodiment is substantially similar to that of the resin pipe joint unit 1 of the first embodiment. Therefore, in Fig. 4, the component having the same action as the first embodiment shown in Figs. 1 and 2 is designated by the same reference numeral, and the detailed description will be omitted.

The third embodiment shown in Fig. 4 differs from the first embodiment shown in Figs. 1 and 2 in that an inner ring portion 31 is integrated with the inside of the pipe portion 6a by the thermal fusion bonding and thereby a flow path 32 of the inner ring portion 31 differs from the flow path 12 of the pipe portion 6a in the inner diameter.

The resin pipe joint unit of the third embodiment can be used for purposes in which the existence of the step have no problem because a flow velocity of the fluid flowing in the flow paths 9, 12, and 32 is slow.

In this case, the same action and effect as the first embodiment are obtained.

### (Fourth Embodiment)

Fig. 6 is a sectional view schematically showing a configuration of a resin pipe joint unit according to a fourth embodiment of the invention. The overall configuration of the resin pipe joint unit of the fourth embodiment is substantially similar to that of the resin pipe joint unit 1 of the first embodiment. Therefore, in Fig. 6, the component having the same action as the first embodiment shown in Figs. 1 and 2 is designated by the same reference numeral, and the detailed description will be omitted.

In the fourth embodiment, a base-end face 36 of an inner ring portion 35 forms a flanged portion 37, and a circular flange groove 38 is formed on the joint body side (left side of Fig. 6) of the flanged portion 37. An inner-peripheral side-face 39 of the flange groove 38 is formed in a tubular slope which is opened toward the joint body side. An inner-peripheral side-face 40 at the end portion of the socket 7 is formed in a tubular slope which faces the tubular slope of the flange groove 38. Therefore, when the inner-peripheral side-face 39 and the inner-peripheral side-face 40 are pressed against each other, force is applied toward the direction, in which the socket 7 is broadened along the slope, to bring the inner-peripheral side-face 39 and the inner-peripheral side-face 40 into close contact with each other.

The junk ring 4 is screwed while the inner ring portion 35 integrated with the pipe portion 6a is fitted in the socket 7 of the joint body 2, which allows the flanged portion 37 to be pressed against the inner surface of the junk ring 4 to insert the inner ring portion 35 into the socket 7. A gap 10 and a gap 41 are formed between the junk ring 4 and the inner ring portion 35, and the junk ring 4 and the inner ring portion 35 are connected to each other only by the external thread 7c formed in the joint body 2 and the internal thread 4a formed in the inner surface of the junk ring 4, so that the inner ring portion 35 is efficiently pressed.

On the other hand, when the junk ring 4 is screwed on the joint body 2, the end portion of the socket 7 is pressed into the flange groove 38. At this point, the inner-peripheral side-face 40 of the socket 7 and the inner-peripheral side-face 39 of the flange groove 38 engage each other while facing each other, and the end portion of the socket 7 is broadened outward when the end portion of the socket 7 is pressed into the flange groove 38, so that the inner ring portion 3 and the socket 7 can tightly be connected to each other.

As a result, in the resin pipe joint shown in the fourth embodiment, the same action and effect as the first embodiment are obtained, and the pipes can be connected stronger than the conventional resin pipe joint.

### (Fifth Embodiment)

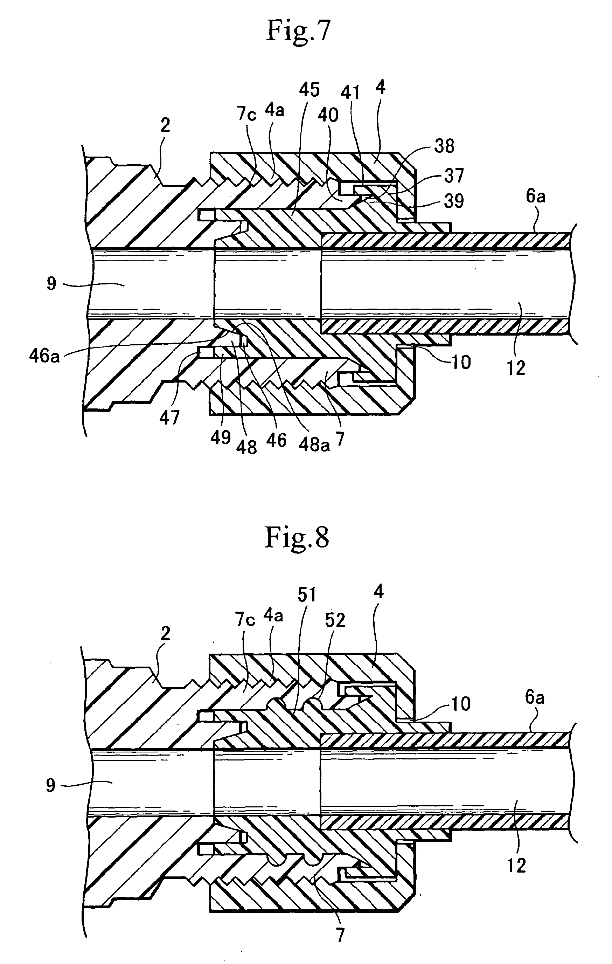

Fig. 7 is a sectional view schematically showing a configuration of a resin pipe joint unit according to a fifth embodiment of the invention. The overall configuration of the resin pipe joint unit of the fifth embodiment is substantially similar to that of the resin pipe joint unit 1 of the fourth embodiment. Therefore, in Fig. 7, the component having the same action as the fourth embodiment shown in Fig. 6 is designated by the same reference numeral, and the detailed description will be omitted.

The fifth embodiment differs from the fourth embodiment in that an annular ring-portion groove 46 is formed in an end face on the side of the joint body 2 of the inner ring portion 45 and an annular body groove 47 is formed in the outer peripheral portion of the inner surface of the joint body 2. In addition, an annular body projection 48 is formed adjacent to the inside of the body groove 47 of the joint body 2. As a result, it looks as if an annular ring-portion projection 49 is formed in the outer peripheral portion on the side of the joint body 2 of the inner ring portion 45.

When the junk ring 4 is screwed on the joint body 2, the annular ring-portion projection 49 is pressed into the body groove 47, and the annular body projection 48 is pressed into the annular ring-portion groove 46. On the other hand, an inner-peripheral side-face 46a of the annular ring-portion groove 46 formed in the inner ring portion 45 and an inner-peripheral side-face 48a of the annular body projection 48 are formed in the annular slopes while facing each other. Therefore, when the junk ring 4 is pressed into the joint body 2, the annular body projection 48 is opened outward along the slope, and the annular body projection 48 presses the annular ring-portion projection 49 against the side of the j oint body 2 to tightly fix the annular ring-portion projection 49.

Similarly to the third embodiment, the end portion of the socket 7 is tightly connected to the annular flanged portion 37 by screwing the junk ring 4 on the joint body 2.

Thus, the resin pipe joint of the fifth embodiment is tightly connected to the joint body 2 at the both ends of the inner ring portion 45, so that the stronger connection can be realized compared with the third embodiment.

### (Sixth Embodiment)

Fig. 8 is a sectional view schematically showing a configuration of a resin pipe joint unit according to a sixth embodiment of the invention. The overall configuration of the resin pipe joint unit of the sixth embodiment is substantially similar to that of the resin pipe joint unit 1 of the fifth embodiment. Therefore, in Fig. 8, the component having the same action as the fifth embodiment shown in Fig. 7 is designated by the same reference numeral, and the detailed description will be omitted.

The sixth embodiment differs from the fifth embodiment in that plural annular projections 52 are formed in the outer peripheral side-face of an inner ring portion 51.

When the junk ring 4 is screwed on the joint body 2, the annular projections 52 enter the inner peripheral surface of the socket 7 of the joint body 2 not only to form the seal with the flow path 9 but also to strengthen the connecting force between the joint body 2 and the inner ring portion 51. The effect is obtained when at least one projection 52 is formed, and preferably three to five projections 52 are formed.

In the sixth embodiment, a recess for receiving the projection 52 is not provided in the inner peripheral surface of the socket 7, but the projections 52 enter the inner peripheral surface of the socket 7 by screwing the junk ring 4. However, the recess into which the projection 52 is fitted may be provided in the inner peripheral surface of the socket 7.

For the above-described embodiments, in the resin pipe joint unit of the invention, the pipe portion 6a and each inner ring portion are integrally and tightly connected to each other. Therefore, even in the existence of the large thermal shock, the pipe portion 6a and the inner ring portion never come apart each other, and the resin pipe joint unit can be designed while higher priority is given to the sealing property and connecting strength between the inner ring portion and the joint body 2.

Since the pipe diameter and length of the pipe portion 6a are standardized, there is an advantage that the standardization of the apparatus or facility to which the resin pipe joint unit of the invention is applied is facilitated.

In the embodiments, one pipe is connected to one fitting port in the resin pipe joint unit. However, it is obvious that the resin pipe joint unit of the invention can be applied to the resin pipe joint in which plural pipes are connected to one pipe or plural pipes are connected to plural pipes.

## Claims

1. A resin pipe joint unit comprising:
a synthetic resin joint body which has a tubular socket at one end portion thereof;
a synthetic resin pipe unit in which an inner ring portion is integrally formed in at least one end of a pipe portion; and
a junk ring which is screwed on the socket of the joint body,
wherein the pipe unit is connected to the joint body in an airtight manner by pressing an end face of the inner ring portion toward a side of the joint body, when the junk ring is screwed on the socket of the joint body.

2. A resin pipe joint unit according to claim 1, wherein the inner ring portion is formed by thermally fusion-bonding the inner ring portion to the pipe portion.

3. A resin pipe joint unit according to claim 1, wherein a pair of the inner ring portions is formed at both ends of the pipe portion, and
a pair of junk rings is attached to the pipe unit so that a thread portion formed in the junk ring is couplable to a thread portion of the joint body, the pair of junk rings connecting the pair of inner ring portion to each of different joint bodies.

4. A resin pipe joint unit according to claim 1, wherein a pressing portion of the inner ring portion has a flanged portion whose outer diameter is equal to or slightly smaller than a socket outer diameter of the joint body,
a circular flange groove is formed on the joint body side of the flanged portion,
an inner-peripheral side-face of the flange groove and an inner-peripheral side-face of a socket end portion of the joint body are formed in annular slopes while facing each other, and
the socket end portion is inserted into the circular groove of the flanged portion when the junk ring is screwed on the socket of the joint body.

5. A resin pipe joint unit according to claim 1, wherein a circular ring-portion groove is formed in an outer peripheral portion on the joint body side of the inner ring portion,
a circular body groove is formed in an outermost peripheral portion of a surface facing the inner ring portion of the joint body, and a circular body projection is formed in the outermost peripheral portion while being adjacent to the circular groove,
an inner-peripheral side-face of the ring-portion groove and an inner-peripheral side-face of the body projection are formed in annular slopes while facing each other, and
the outermost peripheral portion of the inner ring portion is inserted into the body groove and the body projection is inserted into the ring-portion groove, when the junk ring is screwed on the socket of the joint body.

6. A resin pipe joint unit according to claim 1, wherein at least one circular projection is formed in a cylindrical side face of the inner ring portion.

7. A resin pipe joint unit according to claim 1, wherein at least the joint body and the pipe material are made of fluororesin.

8. A resin pipe joint unit according to claim 1, wherein the inner ring portion includes a base-end face perpendicular to a pressing direction by the junk ring on a base end side thereof, and
the junk ring includes a pressing portion which abuts on and presses the base-end face of the inner ring portion.

9. A resin pipe joint unit comprising:
a synthetic resin joint body which has a tubular socket at one end portion thereof;
a synthetic resin pipe unit in which an inner ring portion is integrally formed in at least one end of a pipe portion; and
a junk ring which is screwed on the socket of the joint body,
wherein the inner ring portion includes a base-end face perpendicular to a pressing direction by the junk ring on a base end side thereof while including a front-end face perpendicular to the pressing direction on a front end side thereof,
the junk ring includes a pressing portion which abuts on and presses the base-end face of the inner ring portion, and the socket of the joint body includes a bottom surface which the front-end face of the inner ring portion abuts on and comes into close contact with.
